# NEUE EUROPÄISCHE PATENTSCHRIFT

(11) **EP 0 391 193 B2**
(45) Veröffentlichungstag und Bekanntmachung des Hinweises auf die Entscheidung über den Einspruch: **02.01.1997**
(45) Hinweis auf die Patenterteilung: 13.10.1993
(21) Anmeldenummer: 90105662.2
(22) Anmeldetag: 24.03.1990
(51) Int. Cl.: B29C 71/00, C08J 5/18, B29C 59/04, B29D 11/00

(54) **Verfahren zur Herstellung optisch isotroper Extrusionsfolien**
Process for the production of optically isotropic extruded films
Procédé de fabrication de feuilles extrudées optiquement isotropes

(30) Priorität: 07.04.1989 DE 3911218
(43) Veröffentlichungstag der Anmeldung: 10.10.1990
(73) Patentinhaber: BAYER AG, 51368 Leverkusen (DE)
(72) Erfinder: Wank, Joachim, Dipl.-Ing., D-4047 Dormagen 5 (DE); Weber, Hans Leo, Dipl.-Ing., D-4049 Rommerskirchen (DE); Burkhardt, Claus, Dr., D-4150 Krefeld 1 (DE); Freitag, Dieter, Dr., D-4150 Krefeld 1 (DE); Schulte, Bernhard, Dr., D-4150 Krefeld (DE); Waldenrath, Werner, Dipl.-Ing., D-5000 Köln 1 (DE)

(56) Entgegenhaltungen:
- EP-A- 0 147 779
- EP-A- 0 165 075
- EP-A- 0 198 326
- EP-A- 0 294 705
- NL-A- 8 602 018
- US-A- 4 368 240
- US-A- 4 614 634
- PATENT ABSTRACTS OF JAPAN vol. 011, no. 231 (E-527)28. Juli 1987& JP-A-62 047 179 (ASAHI CHEM IND. CO. LTD. ) 28. Februar 1987

## Beschreibung

Gegenstand der vorliegenden Erfindung ist ein Verfahren zur Herstellung optisch isotroper Extrusionsfolien mit einer Dicke unterhalb 600 µm, vorzugsweise von 500 µm bis 50 µm aus thermoplastischen Kunststoffen, das dadurch gekennzeichnet ist, daß man entweder
a) eine optisch isotrope sowie auf der einen Seite hochglänzende und auf der anderen Seite matte Folie aus dem thermoplastischen Kunststoff durch Extrusion und anschließender Kalandrierung zwischen einer geschliffenen elastischen Walze und einer hochglänzenden Stahlwalze herstellt, und die so hergestellte Folie mit der Schmelze des gleichen thermoplastischen Kunststoffs auf der mattierten Seite der Folie beschichtet, diese erhaltene beschichtete Folie nochmals zwischen einer hochglänzenden Stahlwalze und einer geschliffenen elastischen Walze kalandriert, wobei die hochglänzende Seite der beschichteten Folie zur Walze aus elastischem Material zeigt, oder
b) eine optisch isotrope, jedoch beidseitig hochglänzende Folie aus dem thermoplastischen Kunststoff durch Extrusion und anschließender Kalandrierung zwischen einer lackierten elastischen Walze und einer hochglänzenden Stahlwalze herstellt,
wobei für beide Verfahrensvarianten a) und b)
als thermoplastische Kunststoffe thermoplastische aromatische Polycarbonate auf Basis von Bis-(hydroxyphenyl)-alkanen und/oder cycloalkanen oder thermoplastische aromatische Polyestercarbonate eingesetzt werden und wobei Extrusion und Kalandrierung im Temperaturbereich von 150°C bis 400°C und bei Drücken von 50 bar bis 200 bar durchgeführt wird.

Die Extrusion und anschließende Kalandrierung zwischen einer geschliffenen elastischen Walze und einer hochglänzenden Stahlwalze, erfolgt im Temperaturbereich von vorzugsweise von 280°C bis 320°C und bei Drücken von, vorzugsweise von 80 bar bis 150 bar.

Die erfindungsgemäß einsetzbaren thermoplastischen Kunststoffe sind bekannt.

Bevorzugte thermoplastische Kunststoffe sind die thermoplastischen Polycarbonate auf Basis von Bis-(hydroxyphenyl)-alkanen und/oder - cycloalkanen) beispielsweise auf Basis von 2,2-Bis-(4-hydroxyphenyl)-propan (Bisphenol-A). Doppelbrechungsfreie thermoplastische Kunststoffolien sind bekannt. Sie werden beispielsweise zur Herstellung von "liquid cristal displays" benötigt (siehe US-Patent 4 614 634, auf welcher der Oberbegriff des Anspruchs 1 basiert.

Derartige Folien aus thermoplastischen Kunststoffen lassen sind derzeit in der Praxis nur dadurch herzustellen, daß die nach dem Gieß- oder Extrusionsverfahren hergestellten Folien, deren Anisotropie, gemessen als Gangunterschied der einzelnen optischen Wellenfronten bei > 100 nm liegt, durch ein nachträgliches und sehr aufwendiges Verfahren getempert, beziehungsweise durch organische Lösungsmittel angequollen werden.

Es hat deshalb nicht an Versuchen gefehlt, geeignete Verfahren zu entwickeln, spannungsfreie Folien aus thermoplastischen Kunststoffen herzustellen, wobei in den meisten Fällen davon ausgegangen wurde, durch ein der Folienherstellung direkt nachgeschaltetes Verfahren die Spannungsfreiheit zu erreichen.

Das an sich naheliegende Verfahren, derart dünne Folien durch Extrusion und anschließendes Kalandrieren durch zwei Stahlwalzen zu erreichen, führt bei Dicken kleiner etwa 600 µm nicht zur Doppelbrechungsfreiheit.

Überraschenderweise wurde gefunden, daß optisch isotrope Extrusionsfolien im Dickenbreich unter 600 µm erhalten werden, wenn man die Folien durch Extrusion und anschließende Kalandrierung zwischen einer geschliffenen elastischen Walze und einer hochglänzenden Stahlwalze im Temperaturbereich von 150°C bis 400°C, vorzugsweise von 280°C bis 320°C und bei Drücken von 50 bar bis 200 bar, vorzugsweise von 80 bar bis 150 bar herstellt.

Die so erhältlichen optisch isotropen Extrusionsfolien haben eine glatte und eine rauhe Oberfläche.

Erfindungsgemäß ist es jedoch wünschenswert, derartige doppelbrechungsfreie Folien mit zwei glatten Oberflächen zu erhalten.

Der naheliegende Gedanke, die geschliffene elastische Walze durch eine polierte Stahlwalze zur Erzeugung von 2 glatten Oberflächen zu ersetzen, führt nicht zum gewünschten Erfolg. Mit diesem System hergestellte Folien zeigen hohe und ungleichmäßige Doppelbrechung. Die Kombination Stahlwalze - elastische Walze ist also bestimmend für das Maß der der Folie anhaftenden Doppelbrechung, sie kann allerdings zur Vermeidung der rauhen Oberfläche mit einem hochglänzenden Lack beschichtet sein.

Gegenstand der vorliegenden Erfindung ist somit die Verfahrensvariante b) des erfindungsgemäßen Verfahrens zur Herstellung optisch isotroper Extrusionsfolien mit einer Dicke unterhalb 600 µm und beidseitig glatter Oberfläche, das dadurch gekennzeichnet ist, daß man das erfindungsgemäße Verfahren mit einer geschliffenen elastischen Walze durchführt, die mit einem hochglänzenden Lack beschichtet ist.

Für diesen Einsatz geeignete Lacke sind beispielsweise solche, die der elastischen Verformung des Untergrundes folgen können und gegenüber der sie berührenden heißen Kunststoffschmelze weder zum Kleben neigen noch durch die hohe Temperatur der Kunststoffschmelze geschädigt werden. Geeignete Lacke sind beispielsweise solche auf Basis von Polysiloxanen.

Obwohl solche Systeme zufriedenstellende Ergebnisse bei der Herstellung von optisch isotropen Extrusionsfolien mit zwei glatten Oberflächen im Dickenbereich unter 600 µm liefern, hat es wegen der Empfindlichkeit der lackierten elastischen Walze nicht an Versuchen gefehlt, weitere Möglichkeiten der Herstellung der erfindungsgemäßen Folie zu finden.

Überraschenderweise wurde gefunden, daß man doppelbrechungsfreie Folien mit zwei glatten Oberflächen erhält, wenn man zunächst eine einseitig blanke, einseitig matte Folie durch Extrusion und anschließender Kalandrierung zwischen einer hochglänzenden Stahlwalze und einer geschliffenen elastischen Walze im Temperaturbereich von 150°C bis 400°C, vorzugsweise 280°C bis 320°C und bei Drücken von 50 bar bis 200 bar, vorzugsweise von 80 bar bis 150 bar herstellt, und diese Folie anschließend wieder in den obengenannten Kalander aus hochglänzender Stahlwalze und geschliffener elastischer Walze so einlaufen läßt, daß die blanke Seite der Folie der geschliffenen elastischen Walze zugewandt ist, während die aus der Extruderdüse ausgepreßte Kunststoffschmelze zwischen der polierten Stahlwalze und der zulaufenden Kunststoffolie kalandriert wird. Durch die hohe Temperatur der Kunststoffschmelze bedingten Schmelz- und Verschweißvorgänge erhält man eine beidseitig blanke doppelbrechungsfreie Folie.

Gegenstand der vorliegenden Erfindung ist somit auch die Verfahrensvariante a) des erfindungsgemäßen Verfahrens zur Herstellung optisch isotroper Extrusionsfolien mit einer Dicke unterhalb 600 µm und beidseitig glatter Oberfläche, das dadurch gekennzeichnet ist, daß man zunächst eine einseitig blanke, einseitig matte Folie durch Extrusion und anschließender Kalandrierung zwischen einer hochglänzenden Stahlwalze und einer geschliffenen elastischen Walze im Temperaturbereich von 150°C bis 400°C, vorzugsweise 280°C bis 320°C und bei Drücken von 50 bar bis 200 bar, vorzugsweise 80 bar bis 150 bar herstellt, und diese Folie anschließend wieder in diesen Kalander aus hochglänzender Stahlwalze und geschliffener Walze so einlaufen läßt, daß die blanke Seite der Folie der geschliffenen elastischen Walze zugesandt ist, während die aus der Extruderdüse ausgepreßte Kunststoffschmelze zwischen der polierten Stahlwalze und der zulaufenden Kunststoffolie kalandriert wird.

Die nach dem erfindungsgemäßen Verfahren erhältlichen optisch isotropen Extrusionsfolien können beispielsweise für Liquid-Cristal -Displays oder für die Abdeckung optischer Datenspeicher engesetzt werden.

### Beispiel

Bisphenol-A-Homopolycarbonat mit einer rel. Viskosität von 1,34 (gemessen als 0,5 %ige Lösung in CH₂Cl₂) wird in einem Extruder bei 300°C aufgeschmolzen und diese Schmelze durch eine Breitschlitzdüse ausgedrückt. Die austretende Schmelzefahne wird zwischen einer hochglanzpolierten Stahlwalze und einer geschliffenen Walze aus Silikonkautschuk, dessen Härte 70 Shore A beträgt, abgezogen, wobei eine Folie der Dicke 100 µm erhalten wird.

Die Temperatur der Stahlwalze beträgt 130°C, die Oberflächentemperatur der Silikongummiwalze ca. 120°C. Der Anpreßdruck zwischen Silikongummiwalze und Stahlwalze, gemessen als Liniendruck beträgt 1 kp/cm.

Die Folie wird nach Passieren mehrerer Kühlwalzen aufgewickelt. Die Folie, deren Oberfläche einseitig blank, einseitig matt ist, hat einen Gangunterschied von < 10 nm/mm.

Die so hergstellte Folie wird mit der Schmelze aus dem obigen Polycarbonat, das eine relative Viskosität von 1,34 (gemessen als 0,5 %ige Lösung in Methylenchlorid) hat, in der Weise beschichtet, daß die oben beschriebene isotrope Folie in den Walzenspalt aus geschliffener Silikongummiwalze und Stahlwalze einläuft, wobei die hochglänzende Seite der Folie zur Silikongummiwalze zeigt und die Schmelze auf die mattierte Seite aufläuft.

Die auf diese Weise beschichtete Folie hat eine Gesamtdicke von 300 µm. Die Folie hat eine beidseitig glänzende Oberfläche, die Transmission beträgt 91 % und der Gangunterschied ist < 10 nm/mm.

## Patentansprüche

1. Verfahren zur Herstellung optisch isotroper Extrusionsfolien mit einer Dicke unterhalb 600 µm, aus thermoplastischen Kunststoffen, dadurch gekennzeichnet, daß man entweder
a) eine optisch isotrope sowie auf der einen Seite hochglänzende und auf der anderen Seite matte Folie aus dem thermoplastischen Kunststoff durch Extrusion und anschließender Kalandrierung zwischen einer geschliffenen elastischen Walze und einer hochglänzenden Stahlwalze herstellt, und die so hergestellte Folie mit der Schmelze des gleichen thermoplastischen Kunststoffs auf der mattierten Seite der Folie beschichtet, diese erhaltene beschichtete Folie nochmals zwischen einer hochglänzenden Stahlwalze und einer geschliffenen elastischen Walze kalandriert, wobei die hochglänzende Seite der beschichteten Folie zur Walze aus elastischem Material zeigt, oder
b) eine optisch isotrope, jedoch beidseitig hochglänzende Folie aus dem thermoplastischen Kunststoff durch Extrusion und anschließender Kalandrierung zwischen einer lackierten elastischen Walze und einer hochglänzenden Stahlwalze herstellt,
wobei für beide Verfahrensvarianten a) und b)
als thermoplastische Kunststoffe thermoplastische aromatische Polycarbonate auf Basis von Bis-(hydroxyphenyl)-alkanen und/oder cycloalkanen oder thermoplastische aromatische Polyestercarbonate eingesetzt werden und wobei Extrusion und Kalandrierung im Temperaturbereich von 150°C bis 400°C und bei Drücken von 50 bar bis 200 bar durchgeführt wird.

2. Verfahren gemäß Anspruch 1 zur Herstellung von optisch isotropen Extrusionsfolien mit einer Dicke von 500 µm bis 50 µm.

## Claims

1. Process for producing from thermoplastic materials optically isotropic extruded films having a thickness of less than 600 µm, characterised in that either
a) an optically isotropic film which is high-gloss on one side and matt on the other side is produced from the thermoplastic material by extrusion and subsequent calendering between a face-ground elastic roller and a high-gloss steel roller, and the film thus produced is coated on the matted side thereof with the melt of the same thermoplastic material, the coated film thus obtained is calendered again between a high-gloss steel roller and a face-ground elastic roller, wherein the high-gloss side of the coated film faces the roller of elastic material, or
b) an optically isotropic film which is, however, high-gloss on both sides is produced from the thermoplastic material by extrusion and subsequent calendering between a lacquered elastic roller and a high-gloss steel roller,
wherein in the case of both variants a) and b)
thermoplastic aromatic polycarbonates based on bis-(hydroxyphenyl) alkanes and/or cycloalkanes or thermoplastic aromatic polyester carbonates are utilised as the thermoplastic materials and wherein the extrusion and calendering are carried out within the temperature range 150°C to 400°C and at pressures of from 50 bar to 200 bar.

2. Process according to Claim 1 for producing optically isotropic extruded films having a thickness of from 500 µm to 50 µm.

## Revendications

1. Procédé de fabrication de feuilles extrudées optiquement isotropes d'une épaisseur inférieure à 600 µm, en matières thermoplastiques, caractérisé en ce que
a) on fabrique une feuille optiquement isotrope, à haut brillant d'un côté et mate de l'autre côté en la matière thermoplastique, par extrusion puis calandrage entre un cylindre élastique poli et un cylindre en acier à haut brillant, et on applique la masse fondue de la même matière thermoplastique sur le côté dépoli de la feuille ainsi fabriquée, on calandre encore une fois cette feuille revêtue obtenue entre un cylindre en acier à haut brillant et un cylindre élastique poli, tandis que le côté à haut brillant de la feuille revêtue est tourné vers le cylindre en matière élastique, ou bien
b) on fabrique une feuille optiquement isotrope mais à haut brillant des deux côtés en la matière thermoplastique, par extrusion puis calandrage entre un cylindre élastique verni et un cylindre en acier à haut brillant,
en utilisant pour les deux variantes de procédé a) et b) comme matières thermoplastiques, des polycarbonates aromatiques thermoplastiques à base de bis-(hydroxyphényl)-alcanes et/ou -cycloalcanes ou des polyestercarbonates aromatiques thermoplastiques et en réalisant l'extrusion et le calandrage dans le domaine de température de 150°C à 400°C et à des pressions de 50 bar à 200 bar.

2. Procédé selon la revendication 1 pour la fabrication de feuilles extrudées optiquement isotropes d'une épaisseur de 500 µm à 50 µm.
